# EUROPÄISCHE PATENTANMELDUNG

(11) **EP 2 543 492 A2**
(43) Veröffentlichungstag der Anmeldung: **09.01.2013**
(21) Anmeldenummer: 12186441.7
(22) Anmeldetag: 26.06.2007
(51) Int. Cl.: B29C 45/76, B29C 47/92, G05B 19/406

(54) **Vorrichtung und Verfahren zur benutzerspezifischen Überwachung und Regelung der Produktion**

(30) Priorität: 06.07.2006 DE 102006031268
(62) Teilanmeldung aus: 07765643.7
(71) Anmelder: KraussMaffei Technologies GmbH, 80997 München (DE)
(72) Erfinder: Betsche, Markus, 83026 Rosenheim (DE); Grimm, Günther, 86567 Hilgertshausen (DE); Wyrwoll, Arno, 80999 München (DE)
(74) Vertreter: Wilhelm, Ludwig

(57) **Zusammenfassung**

Die Erfindung betrifft eine Vorrichtung, insbesondere eine Extrusions- oder Spritzgussmaschine, zur benutzerspezifischen Überwachung und bevorzugt zur Regelung der Verarbeitung von Kunststoffen, mit einer Materialzuführungseinrichtung (1), die den Kunststoff als Rohmaterial zuführt, einer Plastifiziereinrichtung (2), die das Rohmaterial plastifiziert/homogenisiert und einer Formgebungseinrichtung (3), die das plastifizierte/homogenisierte Rohmaterial zu einem Produkt formt. Eine Steuerungseinrichtung (5) ist mit einer Eingabeeinrichtung (130) datenverbindbar, über die wenigstens ein Wert einer Verarbeitungseingabegröße, wie die Kosten der Vorrichtung, des Rohmaterials, der Energie und die Verarbeitungsmenge eingegeben werden kann. Über eine Prozessoreinrichtung (14) ist aus wenigstens einer Verarbeitungssteuerungsgröße und/oder Verarbeitungseingabegröße wenigstens eine Verarbeitungsüberwachungsgröße im Wesentlichen in Echtzeit ermittelbar, wie Produktzyklusdauer, Produktkosten, Rohmaterial-/ Energieeinsatz pro Produktzyklus, zu erwartende Gestehungskosten für eine vorgegebene Menge eines Produktes und Produktzyklenanzahl bis zu einer Wartung. Die Steuerungseinrichtung (5) ist mit einer Ausgabeeinrichtung (16) datenverbindbar, über die wenigstens ein Wert wenigstens einer Verarbeitungsüberwachungsgröße, wie der Ist-, Soll-, Durchschnittswert, der seit dem Anfahren integrierte Wert, dessen Historie oder Tendenz ausgegeben und bevorzugt über Kennfeld dargestellt werden kann.

## Beschreibung

Die vorliegende Erfindung betrifft eine Vorrichtung und ein Verfahren zur benutzerspezifischen Überwachung und Regelung der Produktion, insbesondere derartige Vorrichtungen und Verfahren für die Verarbeitung von Kunststoffen zu bestimmten Produkten. Zur Vereinfachung soll die Erfindung im Folgenden anhand von Vorrichtungen zur Verarbeitung von Kunststoffen beschrieben werden. Allerdings soll dies den Gegenstand dieser Erfindung nicht beschränken, welcher vielmehr beliebige Produktionsmaschinen erfasst.

Vorrichtungen zur Verarbeitung von Kunststoffen, wie insbesondere Extrusionsmaschinen oder Spritzgussmaschinen, formen in einer vorbestimmten Abfolge einzelner, über vorbestimmte Prozessparameter steuerbarer Verarbeitungsprozesse die genannten Kunststoffprodukte.

Diese Produkte müssen einerseits oftmals immer höheren Qualitätsanforderungen genügen. Andererseits werden meist große Stückzahlen von einer Reihe von Anbietern produziert, so dass das Produktangebot relativ groß, die zu erzielenden Produktverkaufspreise vergleichsweise klein und dementsprechend der Druck auf die Hersteller zur Einsparung von Kosten, insbesondere zur Reduktion der Energiekosten stetig wächst. Dies erfordert eine genaue Qualitäts-, Produktivitäts- und Kontrolle kostenrelevanter Größen, wie insbesondere des Energieeinsatzes zur Produktion.

Beim Einsatz von Vorrichtungen nach dem Stand der Technik können jedoch die Kosten für ein bestimmtes Produkt allenfalls im Durchschnitt, die Gestehungskosten für ein bestimmtes Produktionslos nur ungefähr bestimmt werden, da hier zahlreiche Durchschnitts- oder Erfahrungswerte wie unter anderem Energie- oder Wartungskosten einer Maschine einfließen. Zudem können diese Werte oftmals erst nach der Produktion angegeben werden, weil vorher nicht alle relevanten Parameter zu Verfügung stehen.

Ein weiterer Nachteil bei bekannten Vorrichtungen ergibt sich daraus, dass für deren Wartung auf Erfahrung basierende, feste Zeitintervalle angesetzt werden. Dadurch werden diese Vorrichtungen in der Regel zu früh gewartet, wodurch unnötige Stillstandzeiten und Kosten entstehen.

Andererseits kann es sich jedoch auch ergeben, dass bereits innerhalb einer solchen üblicherweise ausreichenden, festen Wartungsintervalldauer aufgrund von erhöhtem Verschleiß eine Wartung nötig ist. In diesem Fall wird ein Schaden an der Vorrichtung sowie insbesondere an den zur Formgebung eingesetzten Spritzgusswerkzeugen meist erst zu spät erkannt. Auch dies resultiert in zusätzlichen Aufwendungen in Form von Instandsetzungskosten und wiederum Stillstandzeiten.

Es ist daher die Aufgabe der vorliegenden Erfindung, eine Vorrichtung und ein Verfahren zur Verarbeitung von Kunststoffen zur Verfügung zu stellen, welche die Nachteile des Standes der Technik überwinden und insbesondere eine benutzerspezifische Überwachung und Regelung der Verarbeitung ermöglichen. Ziel dabei ist bevorzugt die Effizienzsteigerung, insbesondere hinsichtlich der für eine vorgegebene Menge eines vorbestimmten Produktes eingesetzten Energie, und die Verringerung von Aufwendungen für Wartung und Instandsetzung

Die Aufgabe wird erfindungsgemäß durch eine Vorrichtung zur Verarbeitung von Kunststoffen mit den Merkmalen gemäß Anspruch 1 gelöst. Das erfindungsgemäße Verfahren ist Gegenstand des Anspruchs 14. Bevorzugte Ausführungsformen und Weiterbildungen sind Gegenstand der Unteransprüche.

Die erfindungsgemäße Vorrichtung ist wenigstens zur benutzerspezifischen Überwachung der Verarbeitung von Kunststoffen in einer vorbestimmten Abfolge einzelner, über vorbestimmte Prozessparameter steuerbarer Verarbeitungsprozesse ausgestaltet. Dazu weist die Vorrichtung erfindungsgemäß wenigstens eine Materialzuführungseinrichtung auf, welche in wenigstens einem Verarbeitungsprozess den zu verarbeitenden Kunststoff als Rohmaterial zuführt. Zudem ist wenigstens eine Plastifiziereinrichtung vorgesehen, welche in wenigstens einem weiteren Verarbeitungsprozess das zugeführte Rohmaterial plastifiziert und/oder homogenisiert.

Weiterhin weist die Vorrichtung gemäß dieser Erfindung wenigstens eine Formgebungseinrichtung auf, insbesondere ein Spritzgusswerkzeug, welche das plastifizierte und/oder homogenisierte Rohmaterial in wenigstens einem weiteren Verarbeitungsprozess zu einem Produkt formt. Dieses Produkt wird der Formgebungseinrichtung nach einer vorbestimmten Abkühl- und/oder Aushärtezeit entnommen. Die beschriebene Abfolge der Verarbeitungsprozesse zwischen Zuführung des Rohmaterials und der Entnahme des Produkts definiert - nach einer vorbestimmten Produktionsanfahrzeit der Vorrichtung - einen Produktzyklus.

Erfindungsgemäß weist die Vorrichtung wenigstens eine Steuerungseinrichtung auf, welche die Verarbeitung über wenigstens eine Verarbeitungssteuergröße - insbesondere über wenigstens einen der Prozessparameter - steuert. Die Steuerungseinrichtung ist mit wenigstens einer Eingabeeinrichtung datenverbindbar.

Als datenverbindbar wird im Rahmen dieser Erfindung verstanden, dass wenigstens zwei Einrichtungen über eine Verbindung zur Übermittlung von Daten verbunden sind. Diese Datenverbindung kann sowohl drahtgebunden, als auch drahtlos ausgestaltet sein. Bevorzugt wird die Datenverbindung mittels gemäß üblicher Standards spezifizierter Datenverbindungen realisiert, wie beispielsweise I²C, RS-232, LAN für drahtgebundene, oder WLAN, Bluetooth für drahtlose Datenverbindung. Es können jedoch auch optische Datenverbindungen über Glasfaser oder Infrarotstrecken zur Anwendung kommen.

Über die Eingabeeinrichtung kann wenigstens ein Wert einer Verarbeitungseingabegröße, wie insbesondere die Kosten der Vorrichtung, des Rohmaterials, der Energie, der Formgebungseinrichtungen, der Abschreibung, der Zinsen und/oder des Personals, Verarbeitungsmenge eingegeben. Bevorzugt kann über die Eingabeeinrichtung zudem wenigstens ein Sollwert wenigstens einer Verarbeitungssteuerungsgröße vorgegeben werden. In bestimmten Ausführungsformen ist die Eingabeeinrichtung nicht Teil der erfindungsgemäßen Vorrichtung. In derartigen Ausführungsformen weist die Vorrichtung jedoch wenigstens eine Datenschnittstelle auf, über welche die Verarbeitungseingabegrößen wie Schwankungen der Rohmaterialkosten und andere Einflüsse seitens externer Eingabeeinrichtung, beispielsweise über einen Zentralrechner, eingeben werden können. Als Eingabeeinrichtung können zudem Peripheriegeräte dienen, aus denen sich ebenfalls Verarbeitungseingabegrößen in Form von Daten mit einbinden lassen.

Erfindungsgemäß ist ferner wenigstens eine Prozessoreinrichtung mit der Steuerungseinrichtung datenverbindbar. Mit Hilfe der Prozessoreinrichtung ist aus wenigstens einer vorbestimmten Verarbeitungssteuerungsgröße und/oder wenigstens einer vorbestimmten Verarbeitungseingabegröße wenigstens eine vorbestimmte Verarbeitungsüberwachungsgröße im Wesentlichen in Echtzeit ermittelbar.

Als typischerweise den Bediener der Vorrichtung interessierende Verarbeitungsüberwachungsgrößen kommen insbesondere Produktzyklusdauer, Produktkosten, Produktqualität, Rohmaterial- und/oder Energieeinsatz pro Produktzyklus in Betracht und ferner - damit im Zusammenhang stehend - der zu erwartende Rohmaterialbedarf, die zu erwartende Produktionsdauer und/oder die zu erwartenden Gestehungskosten für eine vorgegebene Menge eines vorbestimmten Produktes, die Produktfehlerwahrscheinlichkeit, die Produktfehlerhäufigkeit, die Anzahl von Produktzyklen bis zu einer Wartung, Kalibrierung und/oder einem Austausch von Teilen der Vorrichtung, insbesondere der Formgebungseinrichtung, die Wartungs- und Instandsetzungskosten und/oder die Produktionsanfahrzeit und/oder -kosten.

Gemäß der vorliegenden Erfindung ist die Steuerungseinrichtung mit wenigstens einer Ausgabeeinrichtung datenverbindbar. Über die erfindungsgemäße Ausgabeeinrichtung kann wenigstens ein Wert wenigstens einer Verarbeitungsüberwachungsgröße, insbesondere der Ist-, Soll-, Durchschnittswert, der seit dem Anfahren der Vorrichtung integrierte Wert, dessen Historie und/oder die Tendenz ausgegeben werden. Vorzugsweise kann wenigstens einer dieser Werte über ein Kennfeld dargestellt werden.

Bevorzugt sind über die Ausgabeeinrichtung direkt die Istwerte vorrichtungsbedingter Verarbeitungsüberwachungsgrößen wie Produktzyklusdauer, Ausschussrate (Toleranzüberwachung), Stillstandszeiten, Energieeinsatz, Wasser- und Luftverbrauch darstellbar und können die sich daraus ergebenden Verbrauchsraten abgeschätzt und dokumentiert werden.

Vorzugsweise erlaubt die Vorrichtung für jedes Produktionslos einen Vergleich der Soll- zur Ist-Situation vorbestimmter Verarbeitungsüberwachungsgrößen darzustellen, und besonders bevorzugt neben den Istwerten auch deren Historie und die sich aufgrund der Historie ergebende Prognose.

Die erfindungsgemäße Vorrichtung bietet damit ihrem Bediener den Vorteil, den Produktionserfolg nicht mühsam über einzelne Toleranzen beurteilen zu müssen, sondern erlaubt durch eine sinnvolle Kombination diverser Funktionalitäten der Vorrichtung eine zusammenhängende und direktere Bewertung bestimmter genau spezifizierbarer Produktionsziele. Diese lassen sich bei Vorrichtungen nach dem Stand der Technik - wenn überhaupt - erst später bewerten und können dann nicht mehr in den Optimierungsprozess einfließen, der ebenfalls Gegenstand dieser Erfindung ist.

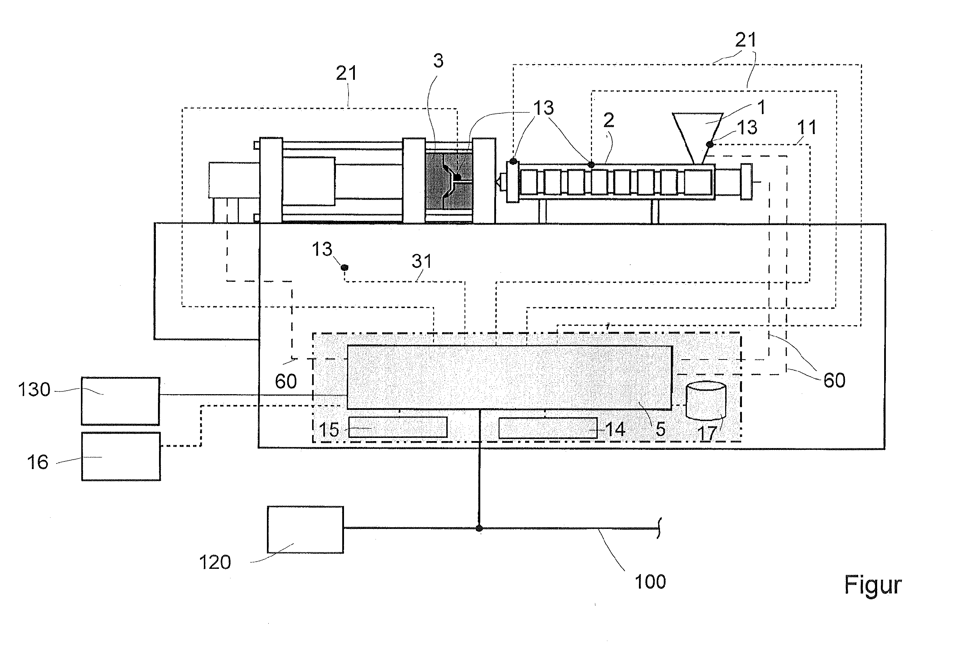

In bevorzugten Ausführungsformen ermöglicht die Ausgabeeinrichtung die Abbildung einer Herstellungskostenkalkulation durch die Verknüpfung der insbesondere Kostengrößen betreffenden Verarbeitungseingabegrößen mit zumeist komplexen Verarbeitungsüberwachungsgrößen im Wesentlichen in Echtzeit. Vorzugsweise erfolgt die Abbildung der Herstellungskostenkalkulation auf einem Bildschirm mit Touchfunktionalität zur Steuerung der Vorrichtung, d.h. Eingabe- und Ausgabeeinrichtung können kombiniert werden.

Vorzugsweise handelt es sich bei der erfindungsgemäßen Vorrichtung um eine Extrusions- oder Spritzgussmaschine.

Gemäß einer bevorzugten Weiterbildung ist die erfindungsgemäße Vorrichtung ferner zur benutzerspezifischen Regelung der Verarbeitung von Kunststoffen eingerichtet. Dazu wird wenigstens eine Verarbeitungsüberwachungsgröße als Verarbeitungsregelungsgröße geregelt, indem die Steuerungseinrichtung ferner mit wenigstens einer Regelungseinrichtung datenverbindbar ist, welche wenigstens eine Verarbeitungsregelungsgröße gemäß wenigstens einem - bevorzugt über die Eingabeeinrichtung - vorgebbaren Regelungskriterium oder auf wenigstens einen vorgebbaren Sollwert regelt.

In einer bevorzugten Weiterbildung der erfindungsgemäßen Vorrichtung ist das wenigstens eine Regelungskriterium einer Gruppe entnommen, welche wenigstens minimale Produktzyklusdauer, d.h. größte Produktausstoßrate, minimalen Energieeinsatz pro Produktzyklus, minimale Produktkosten, minimale Gestehungskosten für eine vorgegebene Menge eines vorbestimmten Produktes, maximale Produktqualität, maximale Anzahl von Produktzyklen bis zu einer Wartung, Kalibrierung und/oder einem Austausch von Teilen der Vorrichtung, minimale Wartungs- und Instandsetzungskosten und/oder minimale Produktionsanfahrzeit und/oder -kosten enthält.

In einer bevorzugten Ausführungsform der erfindungsgemäßen Vorrichtung ist die Prozessoreinrichtung mit wenigstens einer Speichereinrichtung datenverbindbar, in welcher wenigstens für wenigstens eine Verarbeitungsüberwachungs- und/oder -regelungsgröße wenigstens ein unterer und/oder ein oberer - bevorzugt produktbezogener - Erfahrungsgrenzwert gespeichert ist.

In einer weiteren bevorzugten Ausführungsform der erfindungsgemäßen Vorrichtung überwacht die Prozessoreinrichtung bei der Regelung wenigstens einer Verarbeitungsregelungsgröße, wenigstens eine Verarbeitungsüberwachungsgröße derart, dass deren Istwerte den wenigstens einen unteren und/oder oberen Erfahrungsgrenzwert und/oder wenigstens einen - bevorzugt über die Eingabeeinrichtung - vorgegebbaren unteren und/oder oberen - bevorzugt produktbezogenen - Benutzergrenzwert nicht unter- bzw. überschreiten.

In einer bevorzugten Weiterbildung der erfindungsgemäßen Vorrichtung gibt die Steuerungseinrichtung bei der Über- oder Unterschreitung wenigstens eines Erfahrungs- und/oder Benutzergrenzwerts durch den Istwert der wenigstens einen Verarbeitungsüberwachungsgröße - insbesondere bei einer im Wesentlichen dauerhaften Über- oder Unterschreitung über eine vorgebbare Anzahl von Produktzyklen hinweg, ein entsprechendes Warnsignal und/oder eine Warnmeldung über die Ausgabeeinrichtung aus und/oder steuert die Vorrichtung in einen Sicherheitszustand oder schaltet diese ab.

In einer bevorzugten Ausführungsform der erfindungsgemäßen Vorrichtung ist die Steuerungseinrichtung mit wenigstens einer Messeinrichtung datenverbindbar, welche gesteuert durch die Steuerungseinrichtung laufend oder zu vorbestimmten Zeitpunkten während wenigstens eines vorbestimmten Verarbeitungsprozesses innerhalb wenigstens eines vorbestimmten Produktzyklusses wenigstens eine vorbestimmte Verarbeitungsmessgröße misst. Bevorzugt ist diese Verarbeitungsmessgröße einer Gruppe entnommen ist, welche wenigstens Fehler, Stillstandszeiten, insbesondere Rüst- und Wartungszeiten, und/oder Leistungsaufnahme der Vorrichtung, Temperatur, Abnutzung, Standzeiten und/oder Fehler der Formgebungseinrichtung, Temperatur und/oder Verbrauch des zur Abkühlung des Produkts eingesetzten Kühlmittels, Dauer wenigstens eines der Verarbeitungsprozesse, Umgebungstemperatur, Viskosität des für wenigstens eine hydraulische Einrichtung der Vorrichtung benutzen Öls und dergleichen enthält.

In einer weiteren bevorzugten Ausführungsform der erfindungsgemäßen Vorrichtung kann die Prozessoreinrichtung mit Hilfe der wenigstens einen Verarbeitungsmessgröße wenigstens einen Istwert wenigstens einer vorbestimmten Verarbeitungssteuerungs-, -überwachungs- und/oder -regelungsgröße, insbesondere die Produktzyklusdauer und/oder den Energieeinsatz pro Produktzyklus, ermitteln. Bevorzugt ist dabei insbesondere auch die Abweichung des jeweiligen Istwerts vom entsprechenden Sollwert ermittelbar.

In einer bevorzugten Weiterbildung der erfindungsgemäßen Vorrichtung ist wenigstens eine Abhängigkeit wenigstens einer Verarbeitungsüberwachungs- oder -regelungsgröße von wenigstens einer Verarbeitungssteuerungsgröße und/oder wenigstens einer anderen Verarbeitungsüberwachungs- und/oder -regelungsgröße als wenigstens eine Kennfunktion in Form einer vorbestimmten Anzahl diskreter - bevorzugt produktbezogener - Erfahrungswerttupel in der Speichereinrichtung gespeichert.

In einer bevorzugten Ausführungsform der erfindungsgemäßen Vorrichtung kann die Vorrichtung in wenigstens einem - bevorzugt produktbezogenen - Lernmodus betrieben werden. In diesem Lernmodus wird in wenigstens einer Messreihe bei automatischer Änderung des Sollwertes wenigstens einer vorbestimmten Verarbeitungssteuerungsgröße nach wenigstens einem Produktzyklus in vorbestimmten Schritten und ggf. vorbestimmten festen Werten wenigstens einer anderen Verarbeitungssteuerungsgröße mittels der wenigstens einen Messeinrichtung wenigstens eine vorbestimmte Verarbeitungsmessgröße gemessen. Mit Hilfe dieser wenigstens einen vorbestimmten Verarbeitungsmessgröße ermittelt die Prozessoreinrichtung den sich dabei einstellenden wenigstens einen Istwert wenigstens einer vorbestimmten Verarbeitungsregelungs- und/oder -überwachungsgröße und dadurch wenigstens eine Kennfunktion. Die Kennfunktion wird die in der Speichereinrichtung in Form einer vorbestimmten Anzahl diskreter - bevorzugt produktbezogener - Messwerttupel gespeichert.

Eine einfacher Lernmodus kann so ausgestalten sein, dass die Vorrichtung mit Prozessparametern, die typischerweise zur Optimierung der Produkte variiert werden, innerhalb sinnvoller Werteintervalle verschiedene Produktzyklen unter der Prämisse guter Produktqualität durchläuft. Zu den verschiedenen Prozessparametern dieser Produktzyklen werden die jeweiligen Energieeinsätze in den einzelnen Einrichtungen durch entsprechende Messeinrichtungen gemessen, in der Prozessoreinrichtung ausgewertet und in der Speichereinrichtung gespeichert. Das Ergebnis ist eine Kennfunktion (Gesamt-)Energieeinsatz pro Produktzyklus in Abhängigkeit der variierten Prozessparameter. Dieser Kennfunktion können dann die Prozessparameter für den energieeffizientesten Produktzyklus entnommen werden.

Ferner kann anhand der Energieeinsatz/Produktzyklus-Kennfunktion unter Berücksichtigung der jeweiligen Dauer der einzelnen Verarbeitungsprozesse der energetisch optimale Produktzyklus durch geeignete Prozessparameterwahl eingestellt werden.

In einer bevorzugten Ausführungsform kann, sofern dieser energetisch optimale Produktzyklus durch die entsprechende Prozessparameterwahl nicht erreicht wird, der Bediener über die Ausgabeeinrichtung aufgefordert werden, die Prozessparameter zu ändern oder ggf. eine Wartung der Vorrichtung oder des Spritzgusswerkzeugs durchzuführen. Diese produktionsabhängige Instandhaltung ist insofern vorteilhaft, als sie zu einer Erhöhung der durchschnittlichen Standzeiten der Vorrichtung führt, da sich die Instandsetzungsintervalle über die Prozessparameter am tatsächlichen Bedarf und nicht an festen Erfahrungswerten orientieren.

In einer weiteren bevorzugten Ausführungsform der erfindungsgemäßen Vorrichtung ermittelt die Prozessoreinrichtung auf Basis der wenigstens einen Messreihe für die wenigstens eine Verarbeitungseingabegröße wenigstens einen - bevorzugt über die Ausgabeeinrichtung ausgebbaren - Grenzwert, für den wenigstens eine Verarbeitungsüberwachungsgröße, insbesondere die Produktkosten, bei der Regelung wenigstens einer anderen Verarbeitungsregelungsgröße gemäß dem wenigstens einem Regelungskriterium oder auf den wenigstens einen vorbestimmten Sollwert, wenigstens einen vorbestimmten Überwachungsgrenzwert nicht über- oder unterschreitet.

In einer bevorzugten Weiterbildung der erfindungsgemäßen Vorrichtung ermittelt die Prozessoreinrichtung auf der Basis des wenigstens einen Istwerts und/oder der Historie wenigstens einer Verarbeitungsmess-, -überwachungs- und/oder -regelungsgröße, und wenigstens eines Erfahrungs- und/oder Benutzergrenzwerts für diese Größe, wie insbesondere die maximale Viskosität des in wenigstens einer hydraulischen Einrichtung verwendeten Öls, des maximalen Energieeinsatzes pro Produktionszyklus, wenigstens einen - bevorzugt über die Ausgabeeinrichtung ausgebbaren - Grenzwert für die maximale Anzahl weiterer Produktzyklen, bevor eine Wartung, Kalibrierung und/oder ein Austausch von Teilen der Vorrichtung, insbesondere der Formgebungseinrichtung, nötig ist. Dies hat den Vorteil, dass durch die damit realisierte Orientierung der Wartungs- und Instandsetzungsaktivitäten am entsprechenden Istbedarf, die damit verbundenen Kosten minimiert werden können. D.h. die erfindungsgemäße Vorrichtung ermöglicht gezieltere Instandhaltungsmaßnahmen und höhere Standzeiten.

Bevorzugt ermöglicht die Vorrichtung auf der Basis des wenigstens einen Istwerts und/oder der Historie wenigstens einer Verarbeitungsmess-, -überwachungs- und/oder -regelungsgröße den Verschleiß-Istwert und/oder -Fortschritt bestimmter Teile zu bewerten und zu überwachen. Sofern sich beispielsweise bei gleichem Spritzgusswerkzeug und gleicher Produktzyklusdauer der Energieeinsatz im Laufe der Produktionszeit erhöht, ist dies ein Indikator dafür, dass eine Wartung oder Inspektion der Vorrichtung nötig ist.

Vorzugsweise werden in einem solchen Fall weitere Verarbeitungsmess-, - überwachungs- und/oder -regelungsgrößen, die Auskunft über den Verschleiß geben können, durch die Prozessoreinrichtung hinsichtlich ihrer Benutzer- oder Erfahrungsgrenzwerte ausgewertet. Dadurch kann die Vorrichtung automatisch differenzieren, ob ein Ölwechsel bei einer hydraulisch angetriebenen Vorrichtung oder vielmehr eine Wartung des Spritzgusswerkzeuges nötig ist.

Als derartige Verschleißzustandsgrößen kommen insbesondere Verarbeitungsmess-, - überwachungs- und/oder -regelungsgrößen von Regelungsventilen, Pumpen und dergleichen in Betracht. Dazu ist die Vorrichtung bevorzugt geeignet, Langzeitüberwachung der genannten Größen innerhalb des Lebenszyklus der Vorrichtung vorzunehmen. Sofern die Prozessoreinrichtung eine vorbestimmte Abweichung einer dieser Grö-βen aus einem vorbestimmten Toleranzfeld ermittelt, wird der Bediener über die Ausgabeeinrichtung daraufhin gewiesen, dass das entsprechende Verschleißteil, z. B. ein Ventil oder der gleichen zu kalibrieren oder auszutauschen ist.

Der Bediener der Vorrichtung wird ferner über die Ausgabeeinrichtung darüber informiert, welcher Größe sich nicht im Toleranzfeld befinden, kann somit selbst eine Diagnose über den Vorrichtungszustand erstellen und ggf. Teile neu kalibrieren oder austauschen. Eine Kalibrierung der Vorrichtung durch den Kundendienst des Herstellers der Vorrichtung kann somit entfallen. Der Bediener kalibriert die Vorrichtung vielmehr selbst nach Bedarf, wodurch sich wiederum Kosten einsparen lassen.

In einer bevorzugten Ausführungsform der erfindungsgemäßen Vorrichtung erfolgt die Regelung einer Verarbeitungsregelungsgröße dadurch, dass die Prozessoreinrichtung anhand wenigstens einer Kennfunktion dieser Verarbeitungsregelungsgröße deren Abhängigkeit von wenigstens einer Verarbeitungssteuerungsgröße betrachtet und wenigstens ein Mess- oder Erfahrungswert wenigstens einer Verarbeitungssteuerungsgröße ermittelt wird, für welchen der jeweilige Kennfunktionswert gemäß dem jeweiligen Regelungskriterium minimal, maximal oder den geringsten Differenzbetrag zum vorgegebenen Sollwert aufweist.

In einer weiteren bevorzugten Ausführungsform der erfindungsgemäßen Vorrichtung wird bei der Regelung wenigstens einer Verarbeitungsregelungsgröße wenigstens eine Verarbeitungsüberwachungsgröße derart überwacht, dass die Prozessoreinrichtung anhand wenigstens einer Kennfunktion der Verarbeitungsregelungsgröße deren Abhängigkeit von wenigstens einer Verarbeitungssteuerungsgröße und von der Verarbeitungsüberwachungsgröße betrachtet und wenigstens ein Optimalwert unter den Mess- oder Erfahrungswerten wenigstens einer Verarbeitungssteuerungsgröße ermittelt wird, für welchen einerseits der jeweilige Kennfunktionswert gemäß dem jeweiligen Regelungskriterium minimal, maximal oder den geringsten Differenzbetrag zum vorgegebenen Sollwert aufweist und andererseits wenigstens ein zu dem wenigstens einen Optimalwert gehöriger Mess- oder Erfahrungswert der Verarbeitungsüberwachungsgröße den - bevorzugt produktbezogenen - unteren und/oder oberen Erfahrungsgrenzwert und/oder Benutzergrenzwert nicht unter- bzw. überschreitet.

In einer bevorzugten Weiterbildung der erfindungsgemäßen Vorrichtung erfolgt die Regelung wenigstens einer Verarbeitungsregelungsgröße automatisch, indem die Steuerungseinrichtung wenigstens einen Sollwert wenigstens einer Verarbeitungssteuerungsgröße auf wenigstens einen aus der wenigstens einen entsprechenden Kennfunktion ermittelten Optimalwert der wenigstens Verarbeitungssteuerungsgröße setzt.

In einer anderen bevorzugten Ausführungsform der erfindungsgemäßen Vorrichtung erfolgt die Regelung einer Verarbeitungsregelungsgröße manuell, indem der wenigstens eine, aus der wenigstens einen entsprechenden Kennfunktion ermittelte Optimalwert der wenigstens einen Verarbeitungssteuerungsgröße auf der Ausgabeeinrichtung ausgegeben wird, damit der Benutzer den wenigstens einen Sollwert der wenigstens einen entsprechenden Verarbeitungssteuerungsgröße über die Eingabeeinrichtung selbst entsprechend verändern kann. Dieser halbautomatische Betriebsmodus hat den Vorteil, dass - insbesondere bei Aufnahme der Produktion neuer Produktformen - der Bediener vorerst eine Eingriffsmöglichkeit in die Steuerung der Spritzgussmaschine behält oder lediglich Hilfestellungen bei der Optimierung der Verarbeitungsregelungsgröße erwünscht sind.

In einer weiteren bevorzugten Ausführungsform der erfindungsgemäßen Vorrichtung kann die Vorrichtung in wenigstens einem - bevorzugt produktbezogenen - Modus maximaler Ausstoßrate betrieben werden, in welchem die Produktzyklusdauer als Verarbeitungsregelungsgröße auf deren Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

In einer bevorzugten Weiterbildung der erfindungsgemäßen Vorrichtung kann die Vorrichtung in wenigstens einem - bevorzugt produktbezogenen - Modus minimaler Produktkosten betrieben werden kann, in welchem die Produktkosten als Verarbeitungsregelungsgröße auf deren Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

In einer anderen bevorzugten Ausführungsform der erfindungsgemäßen Vorrichtung kann die Vorrichtung in wenigstens einem - bevorzugt produktbezogenen - Modus minimalen Energieeinsatzes pro Produktzyklus betrieben werden, in welchem der Energieeinsatz pro Produktzyklus als Verarbeitungsregelungsgröße auf dessen Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

In einer weiteren bevorzugten Ausführungsform der erfindungsgemäßen Vorrichtung werden wenigstens zwei Verarbeitungsüberwachungsgrößen als Verarbeitungsregelungsgrößen gemäß wenigstens einer vorbestimmen Kombinationen aus den genannten oder dergleichen Regelungskriterien geregelt. Bevorzugt erfolgt dies dadurch, dass die Prozessoreinrichtung - bevorzugt aus der wenigstens einen Kennfunktion oder in dem wenigstens einen Lernmodus - wenigstens einen Optimalwert wenigstens einer Verarbeitungssteuerungsgröße für den optimalen Produktzyklus ermittelt, für den zugleich Produktzyklusdauer, Material- und Energieeinsatz pro Produktzyklus minimal sind.

In einer bevorzugten Weiterbildung der erfindungsgemäßen Vorrichtung ist die Steuerungseinrichtung mit wenigstens einem Datennetz, insbesondere einem Intranet oder dem Internet verbindbar und wird durch die Steuerungseinrichtung wenigstens ein Daten-Dienst im Datennetz zur Verfügung gestellt, welcher einer Gruppe entnommen ist, die Web- und/oder XML-Server-Dienste, FTP-Server-Dienste, SQL-Server-Dienste, E-Mail-Dienste, Applikationsserver-Dienste, insbesondere J2EE-Dienste, File-Server-Dienste, insbesondere WebDAV-, SMB-, NFS- oder AFP-Server-Dienste und dergleichen enthält und/oder dass die Steuerungseinrichtung als Endgerät (Client) für den wenigstens einen Daten-Dienst fungiert.

In einer bevorzugten Ausführungsform der erfindungsgemäßen Vorrichtung stellt die Steuerungseinrichtung mittels wenigstens eines der Datendienste in dem wenigstens einen Datennetz wenigstens eine Verarbeitungssteuerungs-, mess-, überwachungs- und/oder -regelungsgröße, wie insbesondere die Produktzyklusdauer, die Produktkosten, die Produktqualität, den Rohmaterial- und/oder Energieeinsatz pro Produktzyklus, den zu erwartenden Rohmaterialbedarf, die zu erwartende Produktionsdauer und/oder die zu erwartenden Gestehungskosten für eine vorgegebene Menge eines vorbestimmten Produktes, die Produktfehlerwahrscheinlichkeit, die Produktfehlerhäufigkeit, die Anzahl von Produktzyklen bis zu einer Wartung, Kalibrierung und/oder einem Austausch von Teilen der Vorrichtung, insbesondere der Formgebungseinrichtung, die Wartungs- und Instandsetzungskosten und/oder die Produktionsanfahrzeit und/oder - kosten im Wesentlichen in Echtzeit zur Verfügung.

Das erfindungsgemäße Verfahren, insbesondere ein Extrusions- oder Spritzgussverfahren, zur benutzerspezifischen Überwachung der Verarbeitung von Kunststoffen in einer vorbestimmten Abfolge einzelner, über vorbestimmte Prozessparameter steuerbarer Verarbeitungsprozesse, umfasst wenigstens die folgenden Schritte:
In wenigstens einem Materialzuführungsschritt als wenigstens einem Verarbeitungsprozess wird der zu verarbeitenden Kunststoff als Rohmaterial zugeführt. Weiter ist wenigstens ein Plastifizierschritt als wenigstens ein weiterer Verarbeitungsprozess vorgesehen, in dem das zugeführte Rohmaterial plastifiziert und/oder homogenisiert wird.
In wenigstens einem Formgebungsschritt als wenigstens einem weiteren Verarbeitungsprozess wird das plastifizierte und/oder homogenisierte Rohmaterial zu einem Produkt geformt, welches nach einer vorbestimmten Abkühl- und/oder Aushärtezeit entnehmbar ist. Dabei definiert die Abfolge der Verarbeitungsprozesse zwischen Zuführung des Rohmaterials und der Entnahme des Produkts - nach einem Produktionsanfahrschritt - einen Produktzyklus.
In wenigstens einem weiteren erfindungsgemäßen Steuerungsschritt wird die Verarbeitung über wenigstens eine Verarbeitungssteuergröße - insbesondere über wenigstens einen der Prozessparameter - gesteuert.

Erfindungsgemäß ist wenigstens ein Eingabeschritt vorgesehen, durch den wenigstens ein Wert einer Verarbeitungseingabegröße, wie insbesondere die Kosten der Vorrichtung, des Rohmaterials, der Energie, der Formgebungseinrichtungen, der Abschreibung, der Zinsen und/oder des Personals, Verarbeitungsmenge eingegeben und bevorzugt wenigstens ein Sollwert wenigstens einer Verarbeitungssteuerungsgröße vorgegeben werden kann.

In wenigstens einem Prozessierungsschritt ist aus wenigstens einer vorbestimmten Verarbeitungssteuerungsgröße und/oder wenigstens einer vorbestimmten Verarbeitungseingabegröße wenigstens eine vorbestimmte Verarbeitungsüberwachungsgröße im Wesentlichen in Echtzeit ermittelbar, wie insbesondere die Produktzyklusdauer, die Produktkosten, die Produktqualität, den Rohmaterial- und/oder Energieeinsatz pro Produktzyklus, den zu erwartenden Rohmaterialbedarf, die zu erwartende Produktionsdauer und/oder die zu erwartenden Gestehungskosten für eine vorgegebene Menge eines vorbestimmten Produktes, die Produktfehlerwahrscheinlichkeit, die Produktfehlerhäufigkeit, die Anzahl von Produktzyklen bis zu einer Wartung, Kalibrierung und/oder einem Austausch von Teilen der Vorrichtung, insbesondere der Formgebungseinrichtung, die Wartungs- und Instandsetzungskosten und/oder die Produktionsanfahrzeit und/oder -kosten.

Ferner kann in wenigstens einem Ausgabeschritt wenigstens ein Wert wenigstens einer Verarbeitungsüberwachungsgröße, insbesondere der Ist-, Soll-, Durchschnittswert, der seit dem Beginn des Verfahrens integrierte Wert und/oder dessen Historie, und/oder die Tendenz ausgegeben, und bevorzugt über Kennfeld dargestellt werden. Ferner umfasst das erfindungsgemäße Verfahren wenigstens einen Schritt zur benutzerspezifischen Regelung der Verarbeitung von Kunststoffen. In diesem Schritt wird wenigstens eine Verarbeitungsüberwachungsgröße als Verarbeitungsregelungsgröße gemäß wenigstens einem - bevorzugt in dem Eingabeschritt - vorgebbaren Regelungskriterium oder auf wenigstens einen vorgebbaren Sollwert regelt.

Bevorzugte Ausführungsformen der erfindungsgemäßen Vorrichtung haben den Vorteil, dass im Produktionsprozess und bei der Wartung nicht nur durchschnittliche Erfahrungswerte zur Steuerung herangezogen werden. Im Gegensatz zu Vorrichtungen gemäß dem Stand der Technik erfolgt nicht eine simple Steuerung der Produktionsqualität und der Produktionsmenge über die entsprechenden Verarbeitungssteuerungsgrö-βen, sondern eine aktive Regelung meist komplexerer Verarbeitungsregelungsgrößen wie des Energieeinsatzes für eine vorbestimmten Menge eines Produkts.

Damit ist bereits die Bedienerfreundlichkeit der erfindungsgemäßen Vorrichtung gegenüber Vorrichtungen aus dem Stand der Technik erhöht. D.h. der Bediener der Vorrichtung muss nicht umständlich gemittelte Erfahrungswerte für die Verarbeitungssteuerungsgrößen, d.h. vor allem die Prozessparameter der einzelnen Verarbeitungsprozesse finden, für welche die Verarbeitung und/oder die Produkte bestimmten Zielkriterien entsprechen. Vielmehr können derlei Regelungskriterien, wie z. B. minimaler Energieeinsatz für eine vorgegebene Menge eines vorbestimmten Produktes, auf einfache Weise direkt über die Eingabeeinrichtung definiert und/oder ggf. beziffert werden. Damit ermöglichen bevorzugte Ausführungsformen der erfindungsgemäßen Vorrichtung einen automatisiert kosten- und/oder energieeffizienteren Betrieb.

Vorteilhaft sind bevorzugte Ausführungsformen der erfindungsgemäßen Vorrichtung auch insofern, als der Energieeinsatz nicht nur passiv und ungefähr über Verarbeitungssteuerungsgrößen, d.h. i.d.R. über die Prozessparameter gesteuert wird. Vielmehr kann durch Messung bestimmter Istwerte der in den Energieeinsatz einfließenden Verarbeitungsmessgrößen, wie Anschlussleistung der Vorrichtung, Umgebungstemperatur, Temperatur des Rohmaterials, des Spritzgusswerkzeugs, des Kühlwassers und des entformten Produkts über geeignete Berechungsalgorithmen in der Prozessoreinrichtung der genaue Istwert des Energieeinsatzes berechnet, die Abweichung von dessen Sollwert bestimmt und die sich daraus ergebende Fehlergröße auf einfache Weise durch die Regelungseinrichtung minimiert werden.

Dies erfolgt bevorzugt auf der Basis der in den Messreihen bestimmten Abhängigkeiten der Verarbeitungsregelungsgrößen von der Verarbeitungssteuerungsgrößen in Form der in der Speichereinrichtung gespeicherten Kennfunktionen. D.h. die Vorrichtung kann aus den Kennfunktionen durch die Prozessoreinrichtung ermitteln, welche Verarbeitungssteuerungsgrößen, insbesondere welcher Prozessparameter, wie zu verändern sind, damit die Fehlergröße der Regelung nach Möglichkeit verschwindet.

Eine solche aktive Regelung hat ferner der Vorteil, dass hierdurch automatisch berücksichtigt werden kann, dass für verschiedene Produktformen, d.h. für durch unterschiedliche Spritzgusswerkzeuge geformte Produkte, i.d.R. andere, für einen minimalen Energieeinsatz optimale Verarbeitungssteuerungsgrößen eingestellt werden müssen.

Ferner erlauben bevorzugte Ausführungsformen der Vorrichtung gemäß der vorliegenden Erfindung, dass Zusammenhänge zwischen Verarbeitungsüberwachungs- und/oder -regelungsgrößen, wie Produktzyklusdauer und Energieeinsatz pro Produktzyklusdauer in vorteilhafter Weise auch im Regelkreis berücksichtigt werden können. Durch die Berücksichtigung solcher Zusammenhänge können für verschiedene Produktformen eine Vielzahl von Verarbeitungseingabe- und Verarbeitungssteuerungsgrößen in die Regelung und Optimierung des Verarbeitungsprozesses einbezogen werden. D.h. die Vorrichtung ermöglicht auf vorteilhafte Weise diejenigen Verarbeitungssteuerungsgrößen für eine Produktform zu ermitteln, für welche die Verarbeitungsregelungsgröße, wie z. B. den Energieeinsatz pro Produktzyklus, gemäß dem vorgegebenen Regelungskriterium optimal sind, für die jedoch zudem der Istwert einer vorbestimmten Verarbeitungsüberwachungsgröße, wie z. B. die Produktqualität, über einem vorgegebenen unteren Benutzergrenzwert liegt.

Es sei angemerkt, dass nicht alle Vorteile durch sämtliche Ausführungsformen der erfindungsgemäßen Vorrichtung verwirklicht werden müssen.

Weitere Vorteile und Ausführungsformen der vorliegenden Erfindung ergeben sich aus der folgenden Beschreibung bevorzugter Ausführungsbeispiele und der beiliegenden Zeichnung.

Darin zeigt die Figur eine schematische Darstellung einer erfindungsgemäßen Vorrichtung zum Verarbeiten von Kunststoffen.

Im Folgenden wird eine erfindungsgemäße Vorrichtung zur Vereinfachung am Beispiel einer Spritzgussmaschine beschrieben. Dies ist jedoch nicht so auszulegen, dass der Erfindungsgegenstand hierauf beschränkt ist. Vielmehr sind die beschriebenen Merkmale und Funktionen in analoger Weise auch auf Extrusionsmaschinen oder andere kunststoffverarbeitende Maschinen übertragbar.

Die Figur zeigt - wie bereits angedeutet - eine Spritzgussmaschine als Ausführungsform der erfindungsgemäßen Vorrichtung, welche eine Materialzuführungseinrichtung 1 aufweist, durch die einer Plastifiziereinrichtung 2 das zu verarbeitende Rohmaterial zugeführt wird. Ferner weist die erfindungsgemäße Spritzgussmaschine eine Formgebungseinrichtung 3 in Form eines Spritzgusswerkzeugs auf. In das Spritzgusswerkzeug wird das durch die Plastifiziereinrichtung 2 plastifizierte und/oder homogenisierte Rohmaterial bei geschlossenem Spritzgusswerkzeug unter Druck eingespritzt und nach einer vorgegebenen Abkühl- bzw. Aushärtezeit durch Öffnen des Spritzgusswerkzeuges als geformtes Produkt entformt.

Weiterhin weist die Spritzgussmaschine eine Steuerungseinrichtung 5 auf, welche die Verarbeitung des zu verarbeitenden Rohmaterials über die Verarbeitungssteuergrößen - insbesondere über die Prozessparameter wie die Rohmaterialmenge, den Einspritzdruck des plastifizierten und/oder homogenisierten Rohmaterials, die Schließkraft des Spritzgusswerkzeuges und dergleichen - steuert. Dazu ist die Steuerungseinrichtung 5 über Steuerungsleitungen 60 mit der Plastifiziereinrichtung 2, der Materialzuführungseinrichtung 1 und der Formgebungseinrichtung 3 verbunden. Die Steuerungsleitungen 60 übermitteln die Steuerungsbefehle der Steuerungseinrichtung 5 an die gesteuerten Teile der genannten Einrichtungen, wie insbesondere an die Einrichtung zum Öffnen und Schließen des Spritzgusswerkzeuges.

Mit der Steuerungseinrichtung 5 ist ferner die Eingabeeinrichtung 130 datenverbindbar. Als Eingabeeinrichtung 130 sei hier eine standardisierte PC-Tastatur angenommen. In Betracht kommen jedoch auch Lösungen, bei denen die Eingabeeinrichtung 130 und eine Ausgabeeinrichtung 16 als Bildschirm mit Touchfunktion kombiniert sind.

Über die Eingabeeinrichtung 130 können die für die Überwachung und Regelung der Spritzgussmaschine relevanten Werte der Verarbeitungseingabegrößen eingegeben werden. Als solche kommen insbesondere die Kosten des Rohmaterials, der Energie, der Spritzgusswerkzeuge und die Verarbeitungsmenge oder auch Produktmenge, d.h. die Anzahl der in einem Produktionsgang geformten Produkte, in Betracht. Über die Eingabeeinrichtung 130 werden zudem die Sollwerte der Verarbeitungssteuerungsgrö-βen, wie z. B. die Einspritzgeschwindigkeit oder der Einspritzdruck vorgegeben.

Ferner ist eine Prozessoreinrichtung 14 mit der Steuerungseinrichtung 5 datenverbindbar. Mit Hilfe der Prozessoreinrichtung 14 sind aus vorbestimmten Verarbeitungssteuerungsgrößen, wie in diesem Beispiel dem Einspritzdruck und vorbestimmten Verarbeitungseingabegrößen, wie den Energie-, Rohmaterial-, Personal- und den Investitionskosten für die Spritzgussmaschine eine Verarbeitungsüberwachungsgröße, nämlich in diesem Ausführungsbeispiel unter anderem die Kosten jedes einzelnen Produkts sowie die Gestehungskosten einer vorgegebenen Produktmenge - laufend, d.h. auch bei veränderten Verarbeitungssteuerungs- und/oder Verarbeitungseingabegrößen - ermittelbar.

Gemäß dem Ausführungsbeispiel in der Figur ist die Steuerungseinrichtung 5 mit der Ausgabeeinrichtung 16 datenverbindbar. Über die Ausgabeeinrichtung 16 werden die Werte der Verarbeitungsüberwachungsgrößen, insbesondere der Ist-, Soll-, Durchschnittswert, der seit dem Anfahren der Vorrichtung integrierte Wert, dessen Historie und die Tendenz ausgegeben. Außerdem ist die Möglichkeit vorgesehen, einen dieser Werte über Kennfeld darzustellen.

Die Steuerungseinrichtung 5 der Spritzgussmaschine gemäß der Figur ist zudem mit einem Datennetz 100 verbunden, welches einerseits mit einem Datendienstendgerät 120 verbunden ist. Andererseits kann die Steuerungseinrichtung 5 über das Datennetz 100 mit Steuerungseinrichtungen weiterer Kunststoffverarbeitungsmaschinen oder aber über eine entsprechende Schnittstelle mit einem entfernten Netzwerk (Wide Area Network - WAN) oder aber dem Internet verbunden sein.

Die Spritzgussmaschine in der Figur als Ausführungsform der erfindungsgemäßen Vorrichtung ist ferner zur benutzerspezifischen Regelung der Verarbeitung eingerichtet. D.h., dass eine Verarbeitungsüberwachungsgröße, in diesem Beispiel die Gestehungskosten für eine vorgegebene Produktmenge, als Verarbeitungsregelungsgröße geregelt wird. Dazu ist die Steuerungseinrichtung 5 ferner mit der Regelungseinrichtung 15 datenverbindbar. Die Regelungseinrichtung 15 ist damit über die Steuerungseinrichtung 5 auch mit der Eingabeeinrichtung 130 datenverbindbar, über welche das Regelungskriterium, im Ausführungsbeispiel nach der Figur die minimalen Gestehungskosten, vorgegeben werden kann.

Vermittelt durch die Steuerungseinrichtung 5 stehen der Regelungseinrichtung 15 die in der Prozessoreinrichtung 14 ermittelten Istwerte der Gestehungskosten für die vorgegebene Produktmenge zur Verfügung. Dazu sind in der Prozessoreinrichtung 14 geeignete Berechnungsalgorithmen gespeichert und bei veränderter Konfiguration der Spritzgussmaschine aktualisierbar, welche die Verarbeitungseingabegrößen, im Ausführungsbeispiel insbesondere Energie-, Rohmaterial-, Personal- und den Investitionskosten für die Spritzgussmaschine, mit den über geeignete Messeinrichtungen 13 ermittelten Verarbeitungsmessgrößen, wie der Anschlussleistung der Spritzgussmaschine, der Temperatur des Spritzgusswerkzeug oder aus Verarbeitungsmessgrößen, wie dem Rohmaterialvorrat abgeleiteten Verarbeitungsüberwachungsgrößen, z. B. dem Rohmaterialeinsatz für die vorgegebene Produktmenge, verknüpft.

Dazu weist die Spritzgussmaschine gemäß dem Ausführungsbeispiel in der Figur eine erste Messeinrichtung 13 auf, welche an der Materialzuführungseinrichtung 1 angeordnet ist und welche als Verarbeitungsmessgröße den Rohmaterialvorrat misst. Über die Datenverbindungsleitung 11 wird der Istwert des Rohmaterialvorrats an die Steuerungseinrichtung 5 und über diese an die Prozessoreinrichtung 14 übermittelt. Aus der Verarbeitungsmessgröße Rohmaterialvorrat können dann in der Prozessoreinrichtung 14 insbesondere leicht daraus ableitbare Verarbeitungsüberwachungsgrößen wie der Rohmaterialeinsatz für die vorgegebene Produktmenge, der Rohmaterialeinsatz pro Produktzyklus und/oder ganz allgemein die Änderung des Rohmaterialvorrats, insbesondere in Abhängigkeit der Zeit bestimmt werden.

Zudem weist die in der Figur gezeigte Spritzgussmaschine an der Plastifiziereinrichtung 2 und an deren Düse sowie an der Formgebungseinrichtung 3 in Form des Spritzgusswerkzeug selbst zweite Messeinrichtungen 13 auf, welche Verarbeitungsmessgrö-βen messen, die das plastifizierte und/oder homogenisierte Rohmaterial und das nach dem Einspritzen im Spritzgusswerkzeug befindliche Material betreffen. Bevorzugt handelt es sich insbesondere um Zustandsmessgrößen des plastifizierten und/oder homogenisierten Rohmaterials sowie des eingespritzten Materials, wie beispielsweise dessen Temperatur, Viskosität, Homogenität, Druck oder dergleichen. Die Istwerte der genannten Verarbeitungsmessgrößen werden über die Datenverbindungsleitungen 21 an die Steuerungseinrichtung 5 und über diese an die Prozessoreinrichtung 14 übermittelt.

Im darstellten Ausführungsbeispiel weist die Spritzgussmaschine ferner dritte Messeinrichtungen 13 in der Spritzgussmaschine selbst auf, mittels derer Verarbeitungsmessgrößen wie die momentane Leistungsaufnahme, die zur Verfügung gestellte Kühlleistung und dergleichen Betriebszustandsgrößen der Spritzgussmaschine gemessen werden. Über die Datenverbindungsleitung 31 werden die Istwerte der genannten Verarbeitungsmessgrößen an die Steuerungseinrichtung 5 und über diese an die Prozessoreinrichtung 14 übermittelt.

Neben den auf diese Weise ermittelten Istwerten der Gestehungskosten für die vorgegebene Produktmenge steht der Regelungseinrichtung 15 - über die Eingabeeinrichtung 130 vermittelt durch die Steuerungseinrichtung 5 - auch der Sollwert für die Gestehungskosten zur Verfügung und zwar in Form des Regelungskriteriums, nämlich bevorzugt die Regelung auf das Minimum des Gestehungskosten, oder in Form eines oberen Benutzergrenzwerts für die Gestehungskosten, der nicht überschritten werden darf.

Aus dem Istwert der Gestehungskosten kann über deren Historie und Tendenzwert deren Endwert prognostiziert werden. Die Abweichung des prognostizierten Endwerts vom Soll- oder sich bei optimalen Verarbeitungssteuerungsgrößen ergebenden Minimalwerts stellt die Fehlergröße dar, welche durch die Regelungseinrichtung 15 minimiert werden kann. Dies erfolgt bevorzugt auf der Basis der in Messreihen bestimmten Abhängigkeiten der Gestehungskosten als Verarbeitungsregelungsgröße von den Verarbeitungssteuerungsgrößen in Form der in der Speichereinrichtung 17 gespeicherten Kennfunktionen. Dabei ermittelt die Prozessoreinrichtung 14 aus den Kennfunktionen, welche Verarbeitungssteuerungsgröße, insbesondere welcher Prozessparameter, wie zu verändern sind, damit die Fehlergröße der Regelung nach Möglichkeit verschwindet.

Anfänglich ist eine solche Kennfunktion bevorzugt in Form von Erfahrungswerten in der Speichereinrichtung 17 gespeichert. Um jedoch zu berücksichtigen, dass sich die Verarbeitungssteuerungsgrößen, für welche das Verarbeitungsregelungsgröße ihren Optimalwert annimmt für unterschiedliche Produktformen unterschiedlich sind und sich auch im laufenden Produktionsprozess durch veränderte Verarbeitungseingabegrößen, Umkonfigurationen der Spritzgussmaschine, Abnutzung des Spritzgusswerkzeugs usw. verändern, wird die Spritzgussmaschine, bevorzugt in automatisch den eine Aktualisierung der Kennfunktionen erfordernden Ereignissen angepassten Abständen in einem Lernmodus betrieben.

In dem Lernmodus wird bei automatischer Änderung des Sollwertes einer vorbestimmter Verarbeitungssteuerungsgröße in vorbestimmten Schritten, also beispielsweise der Zieltemperatur für die Abkühlung des Produkts, um dieses, ohne dass sich dabei weitere plastische Verformungen ergeben, entformen zu können, und bei im Wesentlichen festen Werten der anderen Verarbeitungssteuerungsgrößen nach einem Produktzyklus mittels einer Messeinrichtung 13 (nicht dargestellt) die für die rechtzeitige Abkühlung vor dem Start eines neuen Produktzyklus nötige Kühlleistung gemessen.

Mit Hilfe dieser Verarbeitungsmessgröße ermittelt die Prozessoreinrichtung 14 über den Istwert der Verarbeitungseingabegröße Kühlenergiekosten den für den Istwert der Kühlleistung prognostizierten Endwert der Gestehungskosten für eine vorgegebene Menge eines vorbestimmten Produktes.

Grundsätzlich erfordert bereits die gewünschte Produktzyklusdauer, anders ausgedrückt die gewünschte Produktausstoßrate, welche zumeist als Verarbeitungsüberwachungsgröße einen unteren Grenzwert übersteigen soll, eine minimale Kühlleistung. Diese kann zugleich auch der Optimalwert hinsichtlich der geringsten Gestehungskosten sein.

Höhere Kühlleistungen können jedoch zur Folge haben, dass sich andere Verarbeitungsüberwachungsgrößen wie z. B. eine geringere Werkzeugabnutzung senkend auf die Gestehungskosten auswirken. Insofern erlaubt der Lernmodus in der genannten Messreihe die produktbezogene Kennfunktion der Gestehungskosten in Abhängigkeit der Kühlleistung und insbesondere eine - möglicherweise hinsichtlich minimaler Gestehungskosten höhere - optimale Kühlleistung zu ermitteln, als deren durch die Produktzyklusdauer gesetztes Minimum. Die Kennfunktion wird in der Speichereinrichtung 17 in Form einer vorbestimmten Anzahl diskreter Messwerttupel, in diesem Beispiel also (Kühlleistung, Gestehungskosten) gespeichert.

Die Prozessoreinrichtung 14 kann mit wenigstens einer Speichereinrichtung 17 datenverbindbar sein, in welcher wenigstens für wenigstens eine Verarbeitungsüberwachungs- und/oder -regelungsgröße wenigstens ein unterer und/oder ein oberer - bevorzugt produktbezogener - Erfahrungsgrenzwert gespeichert ist. Ferner kann die Prozessoreinrichtung 14 bei der Regelung wenigstens einer Verarbeitungsregelungsgröße wenigstens eine Verarbeitungsüberwachungsgröße derart überwachen, dass deren Istwerte den wenigstens einen unteren und/oder oberen Erfahrungsgrenzwert und/oder wenigstens einen - bevorzugt über die Eingabeeinrichtung 130 - vorgegebbaren unteren und/oder oberen - bevorzugt produktbezogenen - Benutzergrenzwert nicht unter- bzw. überschreiten.

Es kann vorgesehen sein, dass die Steuerungseinrichtung 5 bei der Über- oder Unterschreitung wenigstens eines Erfahrungs- und/oder Benutzergrenzwerts durch den Istwert der wenigstens einen Verarbeitungsüberwachungsgröße - insbesondere bei einer im Wesentlichen dauerhaften Über- oder Unterschreitung über eine vorgebbare Anzahl von Produktzyklen hinweg, ein entsprechendes Warnsignal und/oder eine Warnmeldung über die Ausgabeeinrichtung 16 ausgibt und/oder die Vorrichtung in einen Sicherheitszustand steuert oder abschaltet.

Ferner kann vorgesehen werden, dass die Steuerungseinrichtung 5 mit wenigstens einer Messeinrichtung 13 datenverbindbar ist, welche - gesteuert durch die Steuerungseinrichtung 5 - laufend oder zu vorbestimmten Zeitpunkten während wenigstens eines vorbestimmten Verarbeitungsprozesses innerhalb wenigstens eines vorbestimmten Produktzyklusses wenigstens eine vorbestimmte Verarbeitungsmessgröße misst, die einer Gruppe entnommen ist, welche wenigstens Fehler, Stillstandszeiten, insbesondere Rüst- und Wartungszeiten, und/oder Leistungsaufnahme der Vorrichtung, Temperatur, Abnutzung, Standzeiten und/oder Fehler der Formgebungseinrichtung, Temperatur und/oder Verbrauch des zur Abkühlung des Produkts eingesetzten Kühlmittels, Dauer wenigstens eines der Verarbeitungsprozesse, Umgebungstemperatur, Viskosität des für wenigstens eine hydraulische Einrichtung der Vorrichtung benutzen Öls und dergleichen enthält.

Desweiteren kann vorgesehen sein, dass die Prozessoreinrichtung 14 mit Hilfe der wenigstens einen Verarbeitungsmessgröße wenigstens einen Istwert wenigstens einer vorbestimmten Verarbeitungssteuerungs-, -überwachungs- und/oder -regelungsgröße, insbesondere die Produktzyklusdauer und/oder den Energieeinsatz pro Produktzyklus, ermitteln kann, sowie bevorzugt die Abweichung des jeweiligen Istwerts vom entsprechenden Sollwert.

Die Regelung wenigstens einer Verarbeitungsregelungsgröße kann automatisch erfolgen, indem die Steuerungseinrichtung 5 wenigstens einen Sollwert wenigstens einer Verarbeitungssteuerungsgröße auf wenigstens einen aus der wenigstens einen entsprechenden Kennfunktion ermittelten Optimalwert der wenigstens einen Verarbeitungssteuerungsgröße setzt. Es ist aber auch möglich, dass die Regelung einer Verarbeitungsregelungsgröße manuell erfolgt, indem der wenigstens eine aus der wenigstens einen entsprechenden Kennfunktion ermittelte Optimalwert der wenigstens einen Verarbeitungssteuerungsgröße auf der Ausgabeeinrichtung 16 ausgegeben wird, damit der Bediener den wenigstens einen Sollwert der wenigstens einen entsprechenden Verarbeitungssteuerungsgröße über die Eingabeeinrichtung 130 selbst entsprechend verändern kann.

Schließlich kann vorgesehen sein, dass die Steuerungseinrichtung 5 mit wenigstens einem Datennetz 100, insbesondere einem Intranet oder dem Internet verbindbar ist und durch die Steuerungseinrichtung 5 wenigstens ein Daten-Dienst im Datennetz 100 zur Verfügung gestellt wird, welcher einer Gruppe entnommen ist, die Web- und/oder XML-Server-Dienste, FTP-Server-Dienste, SQL-Server-Dienste, E-Mail-Dienste, Applikationsserver-Dienste, insbesondere J2EE-Dienste, File-Server-Dienste, insbesondere WebDAV-, SMB-, NFS- oder AFP-Server-Dienste und dergleichen enthält und/oder dass die Steuerungseinrichtung 5 als Endgerät (Client) für den wenigstens einen Daten-Dienst fungiert.

## Patentansprüche

1. Vorrichtung, insbesondere Extrusions- oder Spritzgussmaschine, zur benutzerspezifischen Überwachung und Regelung der Verarbeitung von Kunststoffen in einer vorbestimmten Abfolge einzelner, über vorbestimmte Prozessparameter steuerbarer Verarbeitungsprozesse mit:
- wenigstens einer Materialzuführungseinrichtung (1), welche in wenigstens einem Verarbeitungsprozess den zu verarbeitenden Kunststoff als Rohmaterial zuführt;
- wenigstens einer Plastifiziereinrichtung (2), welche in wenigstens einem weiteren Verarbeitungsprozess das zugeführte Rohmaterial plastifiziert und/oder homogenisiert;
- wenigstens einer Formgebungseinrichtung (3), insbesondere einem Spritzgusswerkzeug, welche das plastifizierte und/oder homogenisierte Rohmaterial in wenigstens einem weiteren Verarbeitungsprozess zu einem Produkt formt, welches der Formgebungseinrichtung (3) nach einer vorbestimmten Abkühl- und/oder Aushärtezeit entnommen wird, wobei - nach einer vorbestimmten Produktionsanfahrzeit der Vorrichtung - die Abfolge der Verarbeitungsprozesse zwischen Zuführung des Rohmaterials und der Entnahme des Produkts einen Produktzyklus definieren,
- wenigstens einer, die Verarbeitung über wenigstens eine Verarbeitungssteuergröße - insbesondere über wenigstens einen der Prozessparameter - steuernde, Steuerungseinrichtung (5), welche mit wenigstens einer Eingabeeinrichtung (130) datenverbindbar ist, über die wenigstens ein Wert einer Verarbeitungseingabegröße, wie insbesondere die Kosten der Vorrichtung, des Rohmaterials, der Energie, der Formgebungseinrichtungen, der Abschreibung, der Zinsen und/oder des Personals, Verarbeitungsmenge eingegeben und bevorzugt wenigstens ein Sollwert wenigstens einer Verarbeitungssteuerungsgröße vorgegeben werden kann,
- wenigstens einer mit der Steuerungseinrichtung (5) datenverbindbaren Prozessoreinrichtung (14), mit welcher aus wenigstens einer vorbestimmten Verarbeitungssteuerungsgröße und/oder wenigstens einer vorbestimmten Verarbeitungseingabegröße wenigstens eine vorbestimmte Verarbeitungsüberwachungsgröße, wie insbesondere Produktzyklusdauer, Produktkosten, Produktqualität, Rohmaterial- und/oder Energieeinsatz pro Produktzyklus, zu erwartender Rohmaterialbedarf, zu erwartende Produktionsdauer und/oder zu erwartenden Gestehungskosten für eine vorgegebene Menge eines vorbestimmten Produktes, Produktfehlerwahrscheinlichkeit, Produktfehlerhäufigkeit, die Anzahl von Produktzyklen bis zu einer Wartung, Kalibrierung und/oder einem Austausch von Teilen der Vorrichtung, insbesondere der Formgebungseinrichtung, Wartungs- und Instandsetzungskosten, Produktionsanfahrzeit und/oder -kosten, im Wesentlichen in Echtzeit ermittelbar ist,
- wobei die Steuerungseinrichtung (5) mit wenigstens einer Ausgabeeinrichtung (16) datenverbindbar ist, über welche wenigstens ein Wert wenigstens einer Verarbeitungsüberwachungsgröße, insbesondere der Ist-, Soll-, Durchschnittswert, der seit dem Anfahren der Vorrichtung integrierte Wert und/oder dessen Historie, und/oder die Tendenz ausgegeben, und bevorzugt über Kennfeld dargestellt werden kann,
- und wobei wenigstens eine Verarbeitungsüberwachungsgröße als Verarbeitungsregelungsgröße geregelt wird, indem die Steuerungseinrichtung (5) ferner mit wenigstens einer Regelungseinrichtung (15) datenverbindbar ist, welche wenigstens eine Verarbeitungsregelungsgröße gemäß wenigstens einem - bevorzugt über die Eingabeeinrichtung (130) - vorgebbaren Regelungskriterium oder auf wenigstens einen vorgebbaren Sollwert regelt.

2. Vorrichtung nach Anspruch 1,
**dadurch gekennzeichnet, dass**
das wenigstens eine Regelungskriterium einer Gruppe entnommen ist, welche wenigstens minimale Produktzyklusdauer, d.h. größte Produktausstoßrate, minimalen Energieeinsatz pro Produktzyklus, minimale Produktkosten, minimale Gestehungskosten für eine vorgegebene Menge eines vorbestimmten Produktes, maximale Produktqualität, maximale Anzahl von Produktzyklen bis zu einer Wartung, Kalibrierung und/oder einem Austausch von Teilen der Vorrichtung, minimale Wartungs- und Instandsetzungskosten und/oder minimale Produktionsanfahrzeit und/oder -kosten enthält.

3. Vorrichtung nach wenigstens einem der vorangegangenen Ansprüche,
**dadurch gekennzeichnet, dass**
wenigstens eine Abhängigkeit wenigstens einer Verarbeitungsüberwachungs- oder -regelungsgröße von wenigstens einer Verarbeitungssteuerungsgröße und/oder wenigstens einer anderen Verarbeitungsüberwachungs- und/oder - regelungsgröße als wenigstens eine Kennfunktion in Form einer vorbestimmten Anzahl diskreter - bevorzugt produktbezogener -Erfahrungswerttupel in der Speichereinrichtung (17) gespeichert ist.

4. Vorrichtung nach wenigstens einem der vorangegangenen Ansprüche,
**dadurch gekennzeichnet, dass**
die Vorrichtung in wenigstens einem - bevorzugt produktbezogenen - Lernmodus betrieben werden kann, in welchem in wenigstens einer Messreihe bei automatischer Änderung des Sollwertes wenigstens einer vorbestimmten Verarbeitungssteuerungsgröße nach wenigstens einem Produktzyklus in vorbestimmten Schritten und ggf. vorbestimmten festen Werten wenigstens einer anderen Verarbeitungssteuerungsgröße mittels der wenigstens einen Messeinrichtung (13) wenigstens eine vorbestimmte Verarbeitungsmessgröße gemessen wird, mit deren Hilfe die Prozessoreinrichtung (14) den sich dabei einstellenden wenigstens einen Istwert wenigstens einer vorbestimmten Verarbeitungsregelungs- und/oder -überwachungsgröße und dadurch wenigstens eine Kennfunktion ermittelt, die in der Speichereinrichtung (17) in Form einer vorbestimmten Anzahl diskreter - bevorzugt produktbezogener - Messwerttupel gespeichert wird.

5. Vorrichtung nach wenigstens einem der vorangegangenen Ansprüche,
**dadurch gekennzeichnet, dass**
die Prozessoreinrichtung (14) auf Basis der wenigstens einen Messreihe für die wenigstens eine Verarbeitungseingabegröße wenigstens einen - bevorzugt über die Ausgabeeinrichtung (16) ausgebbaren - Grenzwert ermittelt, für den wenigstens eine Verarbeitungsüberwachungsgröße, insbesondere die Produktkosten, bei der Regelung wenigstens einer anderen Verarbeitungsregelungsgröße gemäß dem wenigstens einem Regelungskriterium oder auf den wenigstens einen vorbestimmten Sollwert, wenigstens einen vorbestimmten Überwachungsgrenzwert nicht über- oder unterschreitet.

6. Vorrichtung nach wenigstens einem der vorangegangenen Ansprüche,
**dadurch gekennzeichnet, dass**
die Prozessoreinrichtung (14) auf der Basis des wenigstens einen Istwerts und/oder der Historie wenigstens einer Verarbeitungsmess-, -überwachungs- und/oder -regelungsgröße, und wenigstens eines Erfahrungs- und/oder Benutzergrenzwerts für diese Größe, wie insbesondere der maximalen Viskosität des in hydraulischen Einrichtungen verwendeten Öls oder des maximalen Energieeinsatzes pro Produktionszyklus, wenigstens einen - bevorzugt über die Ausgabeeinrichtung (16) ausgebbaren - Grenzwert für maximale Anzahl weiterer Produktzyklen ermittelt, bevor eine Wartung, Kalibrierung und/oder ein Austausch von Teilen der Vorrichtung, insbesondere der Formgebungseinrichtung, nötig ist, um dadurch Wartungs- und Instandsetzungskosten durch Orientierung am entsprechenden Istbedarf zu minimieren.

7. Vorrichtung nach wenigstens einem der vorangegangenen Ansprüche,
**dadurch gekennzeichnet, dass**
die Regelung einer Verarbeitungsregelungsgröße dadurch erfolgt, dass die Prozessoreinrichtung (14) anhand wenigstens einer Kennfunktion dieser Verarbeitungsregelungsgröße deren Abhängigkeit von wenigstens einer Verarbeitungssteuerungsgröße betrachtet und wenigstens ein Mess- oder Erfahrungswert wenigstens einer Verarbeitungssteuerungsgröße ermittelt wird, für welchen der jeweilige Kennfunktionswert gemäß dem jeweiligen Regelungskriterium minimal, maximal oder den geringsten Differenzbetrag zum vorgegebenen Sollwert aufweist.

8. Vorrichtung nach wenigstens einem der vorangegangenen Ansprüche,
**dadurch gekennzeichnet, dass**
bei der Regelung wenigstens einer Verarbeitungsregelungsgröße wenigstens eine Verarbeitungsüberwachungsgröße derart überwacht wird, dass die Prozessoreinrichtung (14) anhand wenigstens einer Kennfunktion der Verarbeitungsregelungsgröße deren Abhängigkeit von wenigstens einer Verarbeitungssteuerungsgröße und von der Verarbeitungsüberwachungsgröße betrachtet und wenigstens ein Optimalwert unter den Mess- oder Erfahrungswerten wenigstens einer Verarbeitungssteuerungsgröße ermittelt wird, für welchen einerseits der jeweilige Kennfunktionswert gemäß dem jeweiligen Regelungskriterium minimal, maximal oder den geringsten Differenzbetrag zum vorgegebenen Sollwert aufweist und andererseits wenigstens ein zu dem wenigstens einen Optimalwert gehöriger Mess- oder Erfahrungswert der Verarbeitungsüberwachungsgröße den - bevorzugt produktbezogenen - unteren und/oder oberen Erfahrungsgrenzwert und/oder Benutzergrenzwert nicht unter- bzw. überschreitet.

9. Vorrichtung nach wenigstens einem der vorangegangenen Ansprüche,
**dadurch gekennzeichnet, dass**
die Vorrichtung in wenigstens einem - bevorzugt produktbezogenen - Modus maximaler Ausstoßrate betrieben werden kann, in welchem die Produktzyklusdauer als Verarbeitungsregelungsgröße auf deren Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

10. Vorrichtung nach wenigstens einem der vorangegangenen Ansprüche,
**dadurch gekennzeichnet, dass**
die Vorrichtung in wenigstens einem - bevorzugt produktbezogenen - Modus minimaler Produktkosten betrieben werden kann, in welchem die Produktkosten als Verarbeitungsregelungsgröße auf deren Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

11. Vorrichtung nach wenigstens einem der vorangegangenen Ansprüche,
**dadurch gekennzeichnet, dass**
die Vorrichtung in wenigstens einem - bevorzugt produktbezogenen - Modus minimalen Energieeinsatzes pro Produktzyklus betrieben werden kann, in welchem der Energieeinsatz pro Produktzyklus als Verarbeitungsregelungsgröße auf dessen Minimalwert geregelt und die Produktqualität als Verarbeitungsüberwachungsgröße derart überwacht wird, dass sie wenigstens den - bevorzugt produktbezogenen - unteren Erfahrungs- oder Benutzergrenzwert nicht unterschreitet.

12. Vorrichtung nach wenigstens einem der vorangegangenen Ansprüche,
**dadurch gekennzeichnet, dass**
wenigstens zwei Verarbeitungsüberwachungsgrößen als Verarbeitungsregelungsgrößen gemäß wenigstens einer vorbestimmten Kombination aus den genannten oder dergleichen Regelungskriterien geregelt werden, insbesondere indem die Prozessoreinrichtung (14) - bevorzugt aus der wenigstens einen Kennfunktion oder in dem wenigstens einen Lernmodus - wenigstens einen Optimalwert wenigstens einer Verarbeitungssteuerungsgröße für den optimalen Produktzyklus ermittelt, für den zugleich Produktzyklusdauer, Material- und Energieeinsatz pro Produktzyklus minimal sind.

13. Vorrichtung nach wenigstens einem der vorangegangenen Ansprüche,
**dadurch gekennzeichnet, dass**
durch die Steuerungseinrichtung (5) mittels wenigstens eines der Datendienste in dem wenigstens einen Datennetz (100) wenigstens eine Verarbeitungssteuerungs-, mess-, überwachungs- und/oder -regelungsgröße, wie insbesondere Produktzyklusdauer, Produktkosten, Produktqualität, Rohmaterial- und/oder Energieeinsatz pro Produktzyklus, zu erwartender Rohmaterialbedarf, zu erwartende Produktionsdauer und/oder zu erwartenden Gestehungskosten für eine vorgegebene Menge eines vorbestimmten Produktes, Produktfehlerwahrscheinlichkeit, Produktfehlerhäufigkeit, die Anzahl von Produktzyklen bis zu einer Wartung, Kalibrierung und/oder einem Austausch von Teilen der Vorrichtung, insbesondere der Formgebungseinrichtung, Wartungs- und Instandsetzungskosten, Produktionsanfahrzeit und/oder -kosten, im Wesentlichen in Echtzeit zur Verfügung gestellt wird.

14. Verfahren, insbesondere Extrusions- oder Spritzgussverfahren, zur benutzerspezifischen Überwachung und Regelung der Verarbeitung von Kunststoffen in einer vorbestimmten Abfolge einzelner, über vorbestimmte Prozessparameter steuerbarer Verarbeitungsprozesse mit:
- wenigstens einem Materialzuführungsschritt, welcher als wenigstens ein Verarbeitungsprozess den zu verarbeitenden Kunststoff als Rohmaterial zuführt;
- wenigstens einem Plastifizierschritt, welcher als wenigstens ein weiterer Verarbeitungsprozess das zugeführte Rohmaterial plastifiziert und/oder homogenisiert;
- wenigstens einem Formgebungsschritt, welcher das plastifizierte und/oder homogenisierte Rohmaterial als wenigstens ein weiterer Verarbeitungsprozess zu einem Produkt formt, welches nach einer vorbestimmten Abkühl- und/oder Aushärtezeit entnehmbar ist, wobei - nach einem Produktionsanfahrschritt - die Abfolge der Verarbeitungsprozesse zwischen Zuführung des Rohmaterials und der Entnahme des Produkts einen Produktzyklus definieren,
- wenigstens einem, die Verarbeitung über wenigstens eine Verarbeitungssteuergröße - insbesondere über wenigstens einen der Prozessparameter - steuernden, Steuerungsschritt,
- wenigstens einem Eingabeschritt, durch den wenigstens ein Wert einer Verarbeitungseingabegröße, wie insbesondere die Kosten des Verfahrens, des Rohmaterials, der Energie, des Formgebungssschritts, der Abschreibung, der Zinsen und/oder des Personals, Verarbeitungsmenge eingegeben und bevorzugt wenigstens ein Sollwert wenigstens einer Verarbeitungssteuerungsgröße vorgegeben werden kann,
- wenigstens einem Prozessierungsschritt, durch den aus wenigstens einer vorbestimmten Verarbeitungssteuerungsgröße und/oder wenigstens einer vorbestimmten Verarbeitungseingabegröße wenigstens eine vorbestimmte Verarbeitungsüberwachungsgröße, wie insbesondere Produktzyklusdauer, Produktkosten, Produktqualität, Rohmaterial- und/oder Energieeinsatz pro Produktzyklus, zu erwartender Rohmaterialbedarf, zu erwartende Produktionsdauer und/oder zu erwartenden Gestehungskosten für eine vorgegebene Menge eines vorbestimmten Produktes, Produktfehlerwahrscheinlichkeit, Produktfehlerhäufigkeit, die Anzahl von Produktzyklen bis zu einer Wartung, Kalibrierung und/oder einem Austausch von Teilen der Vorrichtung, insbesondere der Formgebungseinrichtung, Wartungs- und Instandsetzungskosten, Produktionsanfahrzeit und/oder -kosten, im Wesentlichen in Echtzeit ermittelbar ist,
- wenigstens einem Ausgabeschritt, durch den wenigstens ein Wert wenigstens einer Verarbeitungsüberwachungsgröße, insbesondere der Ist-, Soll-, Durchschnittswert, der seit dem Beginn des Verfahrens integrierte Wert und/oder dessen Historie, und/oder die Tendenz ausgegeben, und bevorzugt über Kennfeld dargestellt werden kann,
- und wobei wenigstens eine Verarbeitungsüberwachungsgröße als Verarbeitungsregelungsgröße gemäß wenigstens einem - bevorzugt in dem Eingabeschritt- vorgebbaren Regelungskriterium oder auf wenigstens einen vorgebbaren Sollwert geregelt wird.
